# EUROPÄISCHE PATENTSCHRIFT

(11) **EP 3 608 007 B1**
(45) Veröffentlichungstag und Bekanntmachung des Hinweises auf die Patenterteilung: **24.02.2021**
(21) Anmeldenummer: 18187492.6
(22) Anmeldetag: 06.08.2018
(51) Int. Cl.: B03C 1/28, B01D 35/06, B01D 36/00, B01D 35/147, B01D 35/16, B01D 19/00, B01D 29/03, B01D 29/58, B03C 1/30, E03B 7/07, C02F 1/00, B01D 21/24, F24D 19/00, B01D 21/00

(54) **LUFT-/SCHLAMMABSCHEIDER**
AIR/SLUDGE SEPARATOR
SÉPARATEUR D'AIR / DE BOUE

(43) Veröffentlichungstag der Anmeldung: 12.02.2020
(73) Patentinhaber: AFRISO-EURO-INDEX GmbH, 74363 Güglingen (DE)
(72) Erfinder: VON OLNHAUSEN, Thomas, 75031 Kleingartach (DE); MAYER, Eugen, 74177 Bad Friedrichshall (DE)
(74) Vertreter: Kohler Schmid Möbus Patentanwälte

(56) Entgegenhaltungen:
- EP-A1- 3 332 855
- GB-A- 2 500 908
- GB-A- 2 510 011
- GB-A- 2 524 056

## Beschreibung

Die vorliegende Erfindung betrifft einen Luft-/Schlammabscheider zum Abscheiden von in einer Flüssigkeit enthaltenen Partikeln und/oder Luftblasen mit den Merkmalen des Oberbegriffs von Anspruch 1.

Ein derartiger Luft-/Schlammabscheider ist aus der EP 3 332 855 A bekannt und dient dazu, Heizungsanlagen vor Schäden in Folge von starker Verschmutzung zu schützen.

Durch den Einsatz unterschiedlicher Werkstoffe sowie durch Sauerstoffeintrag kommt es in Heizungsanlagen zu Verschlammungen und Verschmutzungen. Diese Verschmutzungen können die einzelnen Komponenten wie Ventile und Pumpen schädigen bzw. zerstören sowie den thermischen Wirkungsgrad der kompletten Anlage negativ beeinflussen. In Schlammabscheidern setzt sich der Schlamm nach unten ab, und mit einem zusätzlichen Magnet, der entweder außen angebracht oder als Stabmagnet eingeschraubt ist, kann Eisenoxid (Magnetit) aus dem Heizungswasser separiert und gebunden werden.

Um den gebundenen Schlamm aus der Heizungsanlage zu entfernen, muss der Schlammabscheider in regelmäßigen Abständen gereinigt bzw. gespült werden. Dazu muss in der Regel ein Ablasshahn auf der Unterseite des Schlammabscheiders geöffnet werden. Mit dem vorhandenen Systemdruck sollen dann die abgeschiedenen Partikel aus dem Schlammabscheider gespült werden. Damit der Schlamm einigermaßen ausgespült werden kann, muss eine entsprechende Menge an Wasser aus der Heizungsanlage abgelassen werden, wodurch ein entsprechender Wasserverlust in der Heizungsanlage entsteht und entsprechend mit Leitungswasser nachgefüllt werden muss (= zusätzlicher Kalkeintrag). Da das Magnetit sehr fest am Abscheidergehäuse anbackt, ist ein wirksames Ausspülen kaum möglich. Wenn das Schlammablassen nicht mehr funktioniert, also beim Öffnen des Ablasshahns nichts mehr austritt, wird der Schlammabscheider in der Praxis zur Reinigung geöffnet, wozu die Heizungsanlage drucklos bzw. abgelassen werden muss, sofern keine Absperrventile (z.B. Kugelhähne) vor und nach dem Schlammabscheider gesetzt wurden. Sind hingegen Absperrventile vorhanden, werden diese vor dem Ablassen manuell geschlossen, bevor der Schlammabscheider dann zur Reinigung geöffnet wird. Meist muss im Anschluss an das Spülen die Heizungsanlage wieder mit Wasser befüllt werden, um den benötigten Systemdruck zu erreichen, und gleichzeitig wieder entlüftet werden.

Aus der eingangs genannten EP 3 332 855 A ist ein Magnetitabscheider mit einem integrierten Kugelhahn bekannt. Über diesen Kugelhahn und über zwei zusätzlich integrierte Rückflussverhinderer kann in einer Kugelhahnstellung der Volumenstrom durch den Filterbereich geleitet und in einer anderen Kugelhahnstellung der Filter im laufenden Betrieb gereinigt werden.

GB 2 524 056 A offenbart einen Magnetitabscheider, welcher zur Reinigung über zwei zusätzlich angebrachte, externe Kugelhähne abgesperrt werden kann. Zum Reinigen können Überwurfmuttern an den Kugelhähnen gelöst werden und der Magnetitabscheider abgenommen werden.

GB 2 510 011 A offenbart ebenfalls einen Magnetitabscheider, welcher zur Reinigung über zwei zusätzlich angebrachte Kugelhähne abgesperrt werden kann.

Es ist demgegenüber die Aufgabe der Erfindung, einen Luft-/Schlammabscheider der eingangs genannten Art dahingehend weiterzubilden, dass das Drucklosmachen der Heizungsanlage vereinfacht wird und nach der Reinigung möglichst kein Wasser nachgefüllt werden muss.

Diese Aufgabe wird erfindungsgemäß durch einen Luft-/Schlammabscheider mit den Merkmalen von Anspruch 1 gelöst.

Erfindungsgemäß kann der interne Drehschieber die Ein- und Auslassöffnungen absperren, so dass auf zusätzliche externe Absperrventile vor und nach dem Luft-/Schlammabscheider verzichtet werden kann. Durch die beidseitige Drehschieber-Absperrung innerhalb des Luft-/Schlammabscheiders geht bei der Reinigung nur eine sehr geringe Menge an Heizungswasser verloren, so dass in der Regel kein Wasser nachgefüllt werden muss, und außerdem ist die Reinigung des Luft-/Schlammabscheiders mit demontiertem Unterteil möglich.

In einer vorteilhaften Ausführungsform ist im Abscheidergehäuse innenseitig vor den Einlass- und Auslassöffnungen jeweils eine innen an der Drehschieberhülse anliegende Flachdichtung mit einer Öffnung angeordnet, welche mit der Einlass- bzw. Auslassöffnung überlappt, wobei die Flachdichtungen aus einem Material gebildet sind, welches elastischer als das Material des Abscheidergehäuses ist. Durch die beiden Flachdichtungen ist in der Absperrstellung eine absolute Dichtheit sichergestellt. Alternativ können die Flachdichtungen auch an der Drehschieberhülse angeordnet sein.

Die Drehschieberhülse weist bevorzugt ein nach oben aus dem Abscheidergehäuse herausstehendes, oberes Hülsenende mit einer Handhabe zum Verdrehen der Drehschieberhülse auf. Dabei können die Handhabe und das obere Hülsenende unverdrehbar ineinandergesteckt sein und beispielsweise einen nicht-kreisförmigen, insbesondere einen polygonen Steckquerschnitt aufweisen.

Vorzugsweise ist das Abscheidergehäuse zweiteilig aus einem Oberteil, welches die Einlass- und Auslassöffnungen aufweist, und einem Unterteil, welches Reinigungskomponenten aufweisen kann, gebildet. Nach Abschrauben einer Überwurfmutter kann das Unterteil vom Oberteil abgenommen und unter fließendem Leitungswasser abgespült werden.

Damit Luft aus dem Abscheidergehäuse entweichen kann, weist das Oberteil oder das obere Hülsenende vorteilhaft einen automatischen Schnellentlüfter auf, der mit einer von der Einlassöffnung abgehenden Einlasskammer und/oder mit einer in die Auslassöffnung mündenden Auslasskammer des Abscheidergehäuses verbunden ist.

Im Abscheidergehäuse, insbesondere in einem Unterteil des Abscheidergehäuses, sind Reinigungskomponenten, wie z.B. Siebe oder ein Magnet, angeordnet, um im Heizungswasser befindliche Schmutz- und Magnetitpartikel zurückzugehalten, sowie auch ein Entleerventil zum Ablassen der im Abscheidergehäuse vorhandenen Flüssigkeit angeordnet.

Bevorzugt sind sämtliche medienberührenden Bauteile, wie z.B. das Abscheidergehäuse und die Drehschieberhülse, aus Kunststoff gebildet. Dadurch wird - im Vergleich zu metallenen Guß- oder Presswerkstoffen (typischerweise Messing) - das Anbacken von Magnetit deutlich reduziert, so dass eine schnelle und effektive Reinigung möglich ist.

Weitere Vorteile und vorteilhafte Ausgestaltungen des Gegenstands der Erfindung sind der Beschreibung, der Zeichnung und den Ansprüchen entnehmbar. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fign. 1a, 1b: einen erfindungsgemäßen Luft-/Schlammabscheider in einer Frontansicht (Fig. 1a) und in einer Explosionsdarstellung (Fig. 1b);
- Fig. 2: einen Längsschnitt des in Fig. 1 gezeigten Luft-/Schlammabscheiders;
- Fig. 3: einen Querschnitt des Luft-/Schlammabscheiders entsprechend III-III in Fig. 2; und
- Fig. 4: ein in Fig. 1 gezeigtes Gehäuseunterteil des Luft-/Schlammabscheiders samt den darin angeordneten Reinigungskomponenten.

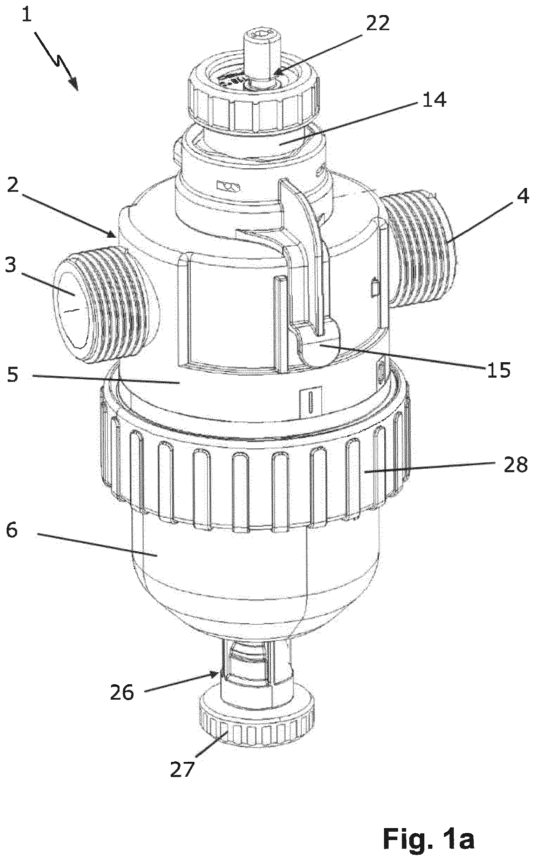

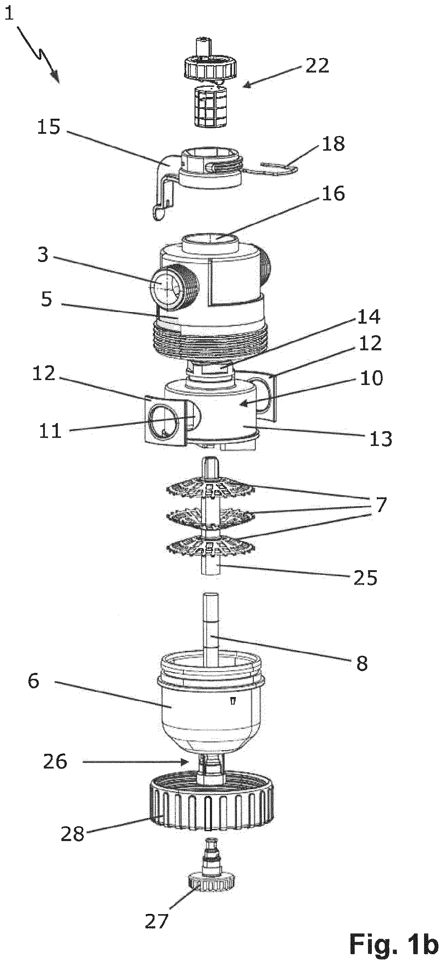

Der in **Fign. 1a****,** **1b** gezeigte Luft-/Schlammabscheider 1 dient zum Abscheiden von im Heizungswasser enthaltenen Partikeln und Luft und weist ein Abscheidergehäuse **2** aus Kunststoff mit einer Einlassöffnung **3** für das zu reinigende Heizungswasser und mit einer Auslassöffnung **4** für das gereinigte Heizungswasser auf. Das Abscheidergehäuse 2 ist zweiteilig aus einem Oberteil **5**, welches auf gleicher Höhe die einander gegenüberliegenden Einlass- und Auslassöffnungen 3, 4 aufweist, und einem Unterteil **6**, welches Reinigungskomponenten **7**, **8** aufweist, zusammengesetzt.

Wie in **Fig, 2** gezeigt, weist das Oberteil 5 im Bereich der Einlass- und Auslassöffnungen 3, 4 eine kreiszylinderförmige Innenwandung **9** auf, innerhalb der eine von außen betätigbare, kreiszylinderförmige Drehschieberhülse **10** aus Kunststoff mit zwei einander gegenüberliegenden Hülsenwandöffnungen **11** drehbar zwischen einer Absperrstellung und einer Offenstellung gelagert ist. In Vertiefungen des Oberteils 5 sind innenseitig vor den Einlass- und Auslassöffnungen 3, 4 teilzylindrische Flachdichtungen **12** mit einer Öffnung angeordnet, welche zusammen mit der Einlass- bzw- Auslassöffnung 3, 4 eine Durchgangsöffnung ausbildet. Die Flachdichtungen 12, die aus einem Kunststoffmaterial gebildet sind, welches elastischer als das Kunststoffmaterial des Abscheidergehäuses 2 ist, liegen außen vollflächig an der Hülsenwand **13** der Drehschieberhülse 10 an, um so die Drehschieberhülse 10 gegenüber dem Oberteil 5 abzudichten.

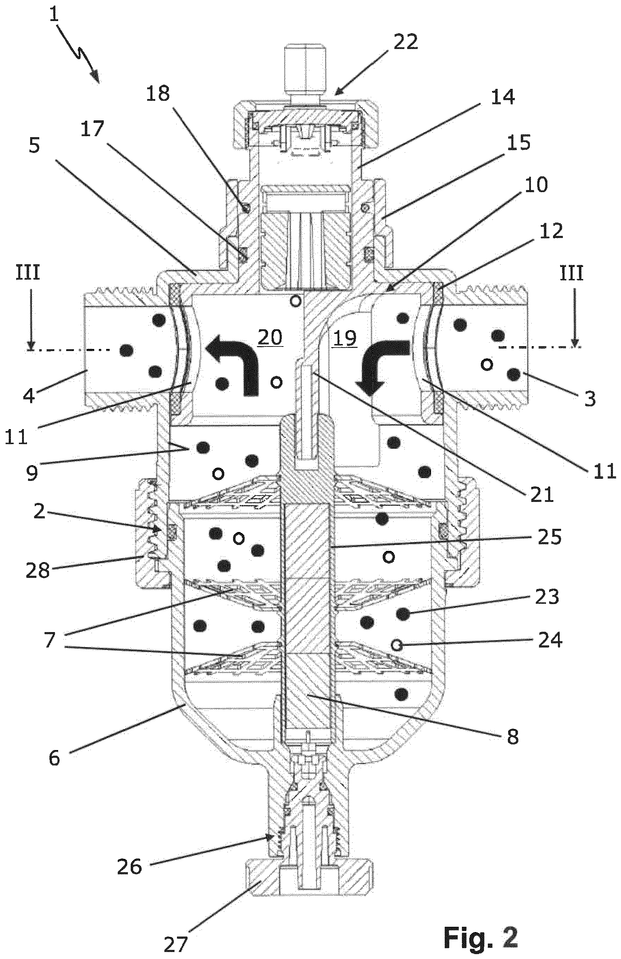

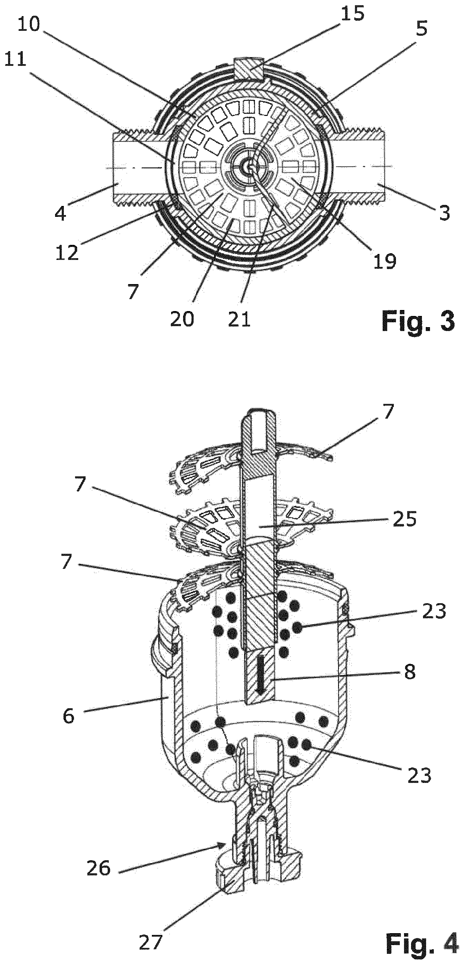

In der Absperrstellung der Drehschieberhülse 10 sind die Einlass- und Auslassöffnungen 3, 4 von der Hülsenwand 13 dicht verschlossen, wohingegen in der in **Fign. 2** **und** **3** gezeigten Offenstellung der Drehschieberhülse 10 die Hülsenwandöffnungen 11 mit den Einlass- und Auslassöffnungen 3, 4 überlappen und dadurch die Einlass- und Auslassöffnungen 3, 4 freigegeben sind.

Die Drehschieberhülse 10 weist ein nach oben aus dem Abscheidergehäuse 2 herausstehendes, flanschartiges oberes Hülsenende **14** mit einer Handhabe **15** zum Verdrehen der Drehschieberhülse 10 auf. Das obere Hülsenende 14 ist in einer Lageröffnung **16** des Oberteils 5 drehbar gelagert und mittels eines Dichtrings **17** abgedichtet. Die Handhabe 15 ist als Absperrhebel ausgeführt, der auf das obere Hülsenende 14 aufgesteckt und mittels eines Bügels **18** gesichert ist. Das obere Hülsenende 14 und die Handhabe 15 weisen jeweils einen quadratischen Steckquerschnitt auf, wodurch die Handhabe 15 drehfest am oberen Hülsenende 14 befestigt ist.

Das Oberteil 5 weist eine von der Einlassöffnung 3 abgehende, nach unten offene Einlasskammer **19** und eine in die in die Auslassöffnung 4 mündende, nach unten offene Auslasskammer **20** auf, die durch eine Trennwand **21** voneinander getrennt sind. Im oberen Hülsenende 14 ist weiterhin ein automatischer Schnellentlüfter **22** angeordnet, der oben an die Auslasskammer 20 angeschlossen ist.

In Fig. 2 ist die Durchflussrichtung des Heizungswassers durch den Luft-/Schlammabscheider 1 mit Pfeilen gekennzeichnet. Durch den vergrößerten Querschnitt wird die Strömungsgeschwindigkeit im Inneren des Luft-/Schlammabscheiders 1 reduziert und beruhigt. Im Heizungswasser befindliche Schmutzpartikel **23** werden an drei Siebplatten 7 zurückgehalten und können sich am Boden des Unterteils 6 ablagern. Im Heizungswasser befindliche feinste Luftblasen **24** können sich in der Auslasskammer 20 sammeln und beruhigt in Richtung Schnellentlüfter 22 aufsteigen. Im Inneren des Abscheidergehäuses 2 ist ein Stabmagnet 8 gehalten, um im Heizungswasser befindliche Magnetitpartikel zu binden. Genauergesagt ist zwischen dem Boden des Unterteils 6 und der Trennwand 21 des Oberteils 5 eine Kunststoffhülse **25** gehalten, an der die drei Siebplatten 7 gehalten bzw. einteilig angeformt sind und in der Stabmagnet 8 angeordnet ist. Über ein Entleerventil **26** im Boden des Unterteils 6 kann das Abscheidergehäuse 2 entleert und dadurch die abgelagerten Schmutzpartikel 23 ausgespült werden.

Soll der Luft-/Schlammabscheider 1 gereinigt werden, wird durch Drehen der Handhabe 15 um ca. 45° die Drehschieberhülse 10 in die Absperrstellung gedreht und dadurch der Luft-/Schlammabscheider 1 vom Heizungskreislauf getrennt. Dabei ist durch die beiden Flachdichtungen 12 eine absolute Dichtheit sichergestellt. Anschließend wird das Entleerventil 26 durch leichtes Lösen einer Ventilschraube **27** geöffnet, um das Heizungswasser aus dem Luft- /Schlammabscheider 1 abzulassen. Durch Abschrauben einer Überwurfmutter **28** kann das Unterteil 6 vom Oberteil 5 abgenommen werden. Die inneren Reinigungskomponenten, also die Siebplatten 7, die Kunststoffhülse 25 und der Stabmagnet 8, werden demontiert, und die Schlamm- und Magnetitpartikel 23 werden unter fließendem Leitungswasser abgespült.

Die Montage findet in umgekehrter Reihenfolge statt. Durch Öffnen der Drehschieberhülse 10 wird der Luft-/Schlammabscheider 1 wieder mit Heizungswasser befüllt. Dabei kann Luft aus der Auslasskammer 20 über den automatischen Schnellentlüfter 22 entweichen. Eine zusätzliche Befüllung mit Frischwasser ist nicht notwendig, da durch das abgelassene Heizungswasser nur ein geringer Druckverlust im Heizungskreislauf zu erwarten ist.

## Patentansprüche

1. Luft-/Schlammabscheider (1) zum Abscheiden von in einer Flüssigkeit enthaltenen Partikeln (23) und/oder Luftblasen (24), mit einem Abscheidergehäuse (2), das eine Einlassöffnung (3) für die zu reinigende Flüssigkeit und eine Auslassöffnung (4) für die gereinigte Flüssigkeit aufweist, wobei im Abscheidergehäuse (2) ein von außen betätigbarer Drehschieber (10) drehbar zwischen einer Absperrstellung und einer Offenstellung gelagert ist,
**dadurch gekennzeichnet,**
**dass** der Drehschieber als eine außenseitig kreiszylinderförmige Drehschieberhülse mit zwei Hülsenwandöffnungen (11) ausgebildet ist, die in der Absperrstellung die Einlass- und Auslassöffnungen (3, 4) verschließt und in der Offenstellung freigibt, und das Abscheidergehäuse (2) im Bereich der Einlass- und Auslassöffnungen (3, 4) eine kreiszylinderförmige Innenwandung (9) aufweist, in der die Drehschieberhülse (10) drehbar gelagert ist, wobei in der Offenstellung die Hülsenwandöffnungen (11) mit den Einlass- und Auslassöffnungen (3, 4) überlappen und in der Absperrstellung die Einlass- und Auslassöffnungen (3, 4) von der Hülsenwand (13) der Drehschieberhülse (10) verschlossen sind.

2. Luft-/Schlammabscheider nach Anspruch 1, **dadurch gekennzeichnet, dass** im Abscheidergehäuse (2) innenseitig vor den Einlass- und Auslassöffnungen (3, 4) jeweils eine innen an der Drehschieberhülse (10) anliegende Flachdichtung (12) mit einer Öffnung angeordnet ist, welche mit der Einlass- bzw. Auslassöffnung (3, 4) überlappt, wobei die Flachdichtungen (12) aus einem Material gebildet sind, welches elastischer als das Material des Abscheidergehäuses (2) ist.

3. Luft-/Schlammabscheider nach Anspruch 2, **dadurch gekennzeichnet, dass** die Drehschieberhülse (10) ein nach oben aus dem Abscheidergehäuse (2) herausstehendes, oberes Hülsenende (14) mit einer Handhabe (15) zum Verdrehen der Drehschieberhülse (10) aufweist.

4. Luft-/Schlammabscheider nach Anspruch 3, **dadurch gekennzeichnet, dass** das obere Hülsenende (14) und die Handhabe (15) unverdrehbar ineinandergesteckt sind.

5. Luft-/Schlammabscheider nach Anspruch 4, **dadurch gekennzeichnet, dass** das obere Hülsenende (14) und die Handhabe (15) jeweils einen nicht-kreisförmigen, insbesondere einen polygonen Steckquerschnitt aufweisen.

6. Luft-/Schlammabscheider nach einem der vorhergehenden Ansprüche, **dadurch gekennzeichnet, dass** die Drehschieberhülse (10) aus Kunststoff gebildet ist.

7. Luft-/Schlammabscheider nach einem der vorhergehenden Ansprüche, **dadurch gekennzeichnet, dass** das Abscheidergehäuse (2) zweiteilig aus einem Oberteil (5), welches die Einlass- und Auslassöffnungen (3, 4) aufweist, und einem Unterteil (6) gebildet ist.

8. Luft-/Schlammabscheider nach einem der vorhergehenden Ansprüche, **dadurch gekennzeichnet, dass** das Oberteil (5) oder das obere Hülsenende (14) einen automatischen Schnellentlüfter (22) aufweist, der mit einer von der Einlassöffnung (3) abgehenden Einlasskammer (19) und/oder mit einer in die Auslassöffnung (4) mündenden Auslasskammer (20) des Abscheidergehäuses (2) verbunden ist.

9. Luft-/Schlammabscheider nach einem der vorhergehenden Ansprüche, **dadurch gekennzeichnet, dass** im Abscheidergehäuse (2), insbesondere in einem Unterteil (6) des Abscheidergehäuses (2), Reinigungskomponenten (7, 8), insbesondere mindestens ein Sieb (7) und/oder ein Magnet (8), angeordnet sind.

10. Luft-/Schlammabscheider nach einem der vorhergehenden Ansprüche, **dadurch gekennzeichnet, dass** im Abscheidergehäuse (2), insbesondere in einem Unterteil (6) des Abscheidergehäuses (2), ein Entleerventil (26) zum Ablassen der im Abscheidergehäuse (2) vorhandenen Flüssigkeit angeordnet ist.

11. Luft-/Schlammabscheider nach einem der vorhergehenden Ansprüche, **dadurch gekennzeichnet, dass** das Abscheidergehäuse (2) aus Kunststoff gebildet ist.

## Claims

1. Air/sludge separator (1) for separating out particles (23) and/or air bubbles (24), contained in a liquid, comprising a separator housing (2) which has an inlet opening (3) for the liquid to be cleaned and has an outlet opening (4) for the cleaned liquid, wherein, in the separator housing (2), an externally actuatable rotary slide (10) is mounted so as to be rotatable between a shut-off position and an open position,
**characterized**
**in that** the rotary slide is in the form of an externally circular-cylindrical rotary slide bush with two bush wall openings (11), which, in the shut-off position, closes off the inlet and outlet openings (3, 4) and which, in the open position, opens up said openings, and the separator housing (2) has in the region of the inlet and outlet openings (3, 4) a circular-cylindrical inner wall (9) in which the rotary slide bush (10) is rotatably mounted, wherein, in the open position, the bush wall openings (11) overlap the inlet and outlet openings (3, 4) and, in the shut-off position, the inlet and outlet openings (3, 4) are closed off by the bush wall (13) of the rotary slide bush (10).

2. Air/sludge separator according to claim 1, **characterized in that**, in the separator housing (2), there is arranged in front of the inlet and outlet openings (3, 4) on the inner side in each case one flat seal (12) which bears internally against the rotary slide bush (10) and which has an opening which overlaps the inlet or outlet opening (3, 4), wherein the flat seals (12) are formed from a material which is more elastic than the material of the separator housing (2).

3. Air/sludge separator according to claim 2, **characterized in that** the rotary slide bush (10) has an upper bush end (14) protruding upwardly out of the separator housing (2), with a handle (15) for rotating the rotary slide bush (10).

4. Air/sludge separator according to claim 3, **characterized in that** the upper bush end (14) and the handle (15) are plugged non-rotatably one inside the other.

5. Air/sludge separator according to claim 4, **characterized in that** the upper bush end (14) and the handle (15) each have a non-circular, in particular a polygonal, plugging cross-section.

6. Air/sludge separator according to one of the preceding claims, **characterized in that** the rotary slide bush (10) is formed from plastic.

7. Air/sludge separator according to one of the preceding claims, **characterized in that** the separator housing (2) is formed in two parts from a top part (5), which has the inlet and outlet openings (3, 4), and a bottom part (6).

8. Air/sludge separator according to one of the preceding claims, **characterized in that** the top part (5) or the upper bush end (14) has an automatic rapid-venting means (22), which is connected to an inlet chamber (19), departing from the inlet opening (3), and/or to an outlet chamber (20), opening into the outlet opening (4), of the separator housing (2).

9. Air/sludge separator according to one of the preceding claims, **characterized in that** cleaning components (7, 8), in particular at least one screen (7) and/or a magnet (8), are arranged in the separator housing (2), in particular in a bottom part (6) of the separator housing (2).

10. Air/sludge separator according to one of the preceding claims, **characterized in that** an emptying valve (26) for draining the liquid present in the separator housing (2) is arranged in the separator housing (2), in particular in a bottom part (6) of the separator housing (2).

11. Air/sludge separator according to one of the preceding claims, **characterized in that** the separator housing (2) is formed from plastic.

## Revendications

1. Séparateur (1) air-boues, dévolu à la séparation de particules (23) et/ou de bulles d'air (24) renfermées par un liquide, muni d'un boîtier (2) comprenant un orifice d'admission (3) dédié au liquide à épurer et un orifice de sortie (4) destiné au liquide épuré, un tiroir rotatif (10) actionnable de l'extérieur étant monté, dans ledit boîtier (2) du séparateur, avec faculté de rotation entre une position de blocage et une position d'ouverture,
**caractérisé par le fait**
**que** le tiroir rotatif est réalisé en tant que manchon rotatif de distribution revêtant extérieurement la forme d'un cylindre circulaire dont la paroi est percée de deux orifices (11), qui obture les orifices (3, 4) d'admission et de sortie dans la position de blocage, et les libère dans la position d'ouverture, le boîtier (2) dudit séparateur présentant, dans la région desdits orifices (3, 4) d'admission et de sortie, une paroi intérieure (9) de forme cylindrique circulaire dans laquelle ledit manchon rotatif de distribution (10) est monté à rotation, sachant que les orifices (11) de la paroi dudit manchon chevauchent les orifices (3, 4) d'admission et de sortie, dans la position d'ouverture, et que lesdits orifices (3, 4) d'admission et de sortie sont obturés par la paroi (13) dudit manchon rotatif de distribution (10) dans la position de blocage.

2. Séparateur air-boues selon la revendication 1, **caractérisé par le fait que** le boîtier (2) dudit séparateur comporte intérieurement, devant les orifices (3, 4) d'admission et de sortie, une garniture d'étanchement aplatie (12) respective, intérieurement en applique contre le manchon rotatif de distribution (10) et percée d'un orifice qui chevauche l'orifice (3, respectivement 4) d'admission et de sortie, les garnitures d'étanchement aplaties (12) étant constituées d'un matériau doué d'une élasticité supérieure à celle du matériau dudit boîtier (2) du séparateur.

3. Séparateur air-boues selon la revendication 2, **caractérisé par le fait que** le manchon rotatif de distribution (10) comporte une extrémité supérieure (14) faisant saillie, vers le haut, au-delà du boîtier (2) dudit séparateur et pourvue d'une poigné (15) conçue pour faire tourner ledit manchon rotatif de distribution (10).

4. Séparateur air-boues selon la revendication 3, **caractérisé par le fait que** l'extrémité supérieure (14) du manchon et la poignée (15) sont emboîtées l'une dans l'autre avec verrouillage antirotation.

5. Séparateur air-boues selon la revendication 4, **caractérisé par le fait que** l'extrémité supérieure (14) du manchon et la poignée (15) sont respectivement dotées d'une section transversale d'emboîtement non circulaire, en particulier polygonale.

6. Séparateur air-boues selon l'une des revendications précédentes, **caractérisé par le fait que** le manchon rotatif de distribution (10) est constitué d'une matière plastique.

7. Séparateur air-boues selon l'une des revendications précédentes, **caractérisé par le fait que** le boîtier (2) dudit séparateur est composé de deux parties, d'une partie supérieure (5) comportant les orifices (3, 4) d'admission et de sortie, et d'une partie inférieure (6).

8. Séparateur air-boues selon l'une des revendications précédentes, **caractérisé par le fait que** la partie supérieure (5), ou l'extrémité supérieure (14) du manchon, est pourvue d'un évent rapide automatique (22) raccordé à une chambre d'admission (19) partant de l'orifice d'admission (3), et/ou à une chambre de sortie (20) du boîtier (2) dudit séparateur qui débouche dans l'orifice de sortie (4).

9. Séparateur air-boues selon l'une des revendications précédentes, **caractérisé par le fait que** des éléments structurels d'épuration (7, 8), en particulier au moins un tamis (7) et/ou un aimant (8), sont logés dans le boîtier (2) dudit séparateur, notamment dans une partie inférieure (6) dudit boîtier (2) du séparateur.

10. Séparateur air-boues selon l'une des revendications précédentes, **caractérisé par le fait qu'**une vanne de vidange (26), conçue pour évacuer le liquide présent dans le boîtier (2) dudit séparateur, est implantée dans ledit boîtier (2) du séparateur et notamment dans une partie inférieure (6) dudit boîtier (2) dudit séparateur.

11. Séparateur air-boues selon l'une des revendications précédentes, **caractérisé par le fait que** le boîtier (2) dudit séparateur est constitué d'une matière plastique.
